# EUROPEAN PATENT SPECIFICATION

(11) **EP 2 668 938 B1**
(45) Date of publication and mention of the grant of the patent: **20.07.2016**
(21) Application number: 13169699.9
(22) Date of filing: 29.05.2013
(51) Int. Cl.: H05B 6/00, A61H 33/06, F24D 13/02, H05B 3/20

(54) **Sauna infrared heating panel systems and methods**
Sauna-Infrarotheizungspaneelsysteme und Verfahren
Systèmes de panneaux de chauffage à infrarouge pour sauna et procédés

(30) Priority: 31.05.2012 US 201261689184 P; 31.05.2012 US 201261689210 P; 15.03.2013 US 201313837087
(43) Date of publication of application: 04.12.2013
(73) Proprietor: TyloHelo, Inc., Cokato, MN 55321 (US)
(72) Inventor: Benda, Steven John, Cokato, MN 55321 (US); Felder, Tracy Ray, Winsted, MN 55395 (US)
(74) Representative: Persson, Albin

(56) References cited:
- EP-A2- 1 564 341
- WO-A1-2006/009358
- WO-A1-2008/105612
- WO-A1-2010/107376
- WO-A2-2011/097086
- US-A1- 2011 081 135

## Description

### FIELD

This disclosure relates generally to electric heating systems for sauna applications, and more particularly, to infrared heating panels and materials, arrangements and methods of shielding for such panels.

### BACKGROUND

Sauna systems throughout history have employed various systems and methods of heating a space to provide the therapeutic and cleansing effects of heat. As is well known, heat causes the human body to perspire and can also provide soothing and therapeutic effects to muscles and joints. Known systems for heating a sauna have included using open fires, enclosed stoves, and steam generators among others. While these systems have had varying degrees of effectiveness, each has further been found to present drawbacks. For example, systems using open fires, while providing direct open-flame heating, have been found to result in smoke-filled sauna rooms. Additionally, the heat created from such open fires is often short lived. On the other hand, wood stoves have been found to enable a more controlled heat over a greater period of time, but also shield the heat due to the enclosed nature of the stoves.

As a possible consequence of the drawbacks with prior heating systems, electrically-energized heaters have been developed and have gained popularity for their use in saunas. Some of these include electrically-resistive heaters and energized radiant heaters. To that end, some types of radiant heat systems have been designed to employ infrared (IR) heating panels to generate electromagnetic radiation within the infrared spectrum. When absorbed by the body of a sauna user, the IR radiation excites the molecules within the body to generate warming. Whereas steam or warm air is generally found to only heat the skin and tissue directly underneath (via conduction), IR radiation has been found to more deeply penetrate the body (e.g., to about 1.5 inches (38 mm)) to more effectively and comfortably warm the body to a sweating temperature without the use of a conductive medium.

As is known, an electromagnetic (EM) field is generated by passing electric current through a conductor. EM fields can generally be considered as including electric fields and magnetic fields interacting together. Electric fields stem from electric charges, with field intensity typically measured in Volts/meter. Magnetic fields are caused by an electric current of moving charges, with field or flux density typically measured in gauss. The term electromagnetic radiation (also EMR) is sometimes used to refer to EM fields radiating through space apart from their source.

Radiant heating systems are generally powered by conventional alternating current (AC) power sources, such as 110 volt, 60 Hz AC in the United States or 230 volt, 50 Hz AC in Europe. Such heating systems thus tend to generate some amount of low frequency (e.g., 50-60 Hz) electromagnetic radiation in addition to the desired IR radiation utilized for heating. It has been estimated that in some cases, IR sauna systems may generate low frequency EM radiation with magnetic field levels as high as 60 milligauss. In comparison, areas under high voltage transmission lines have been measured with low frequency magnetic field levels as high as 1.9 milligauss and outdoor areas in open spaces have been measured with low frequency magnetic field levels as low as 0.3 milligauss. In addition to the magnetic components of EM radiation, electric field components may also be emitted from infrared sauna systems

Concerns about high levels of low frequency radiation have led to multiple attempts at reducing the level of low frequency EM radiation in heating systems and saunas, including IR heating systems used in saunas. These include increasing the distance from the emitting source and reducing the exposure time to the radiation level. In addition, attempts have also been made to reduce the level of low frequency EM radiation through EM cancellation schemes, such as by producing multiple low frequency EM fields that tend to cancel one another. US2011/0081135 discloses an IR panel for a sauna, including a heat emitting carbon membrane and a grounding layer. WO2008/105612 discloses a heating mat panel including a net shaped connection structure.

### SUMMARY

Embodiments of the present invention relate to infrared (IR) systems for saunas, with such systems involving one or more infrared heating panels. Each panel is configured to include a substrate, and IR heating elements supported by the substrate. When energized, the heating elements emits IR radiation. A return element is also supported by the substrate and generally forms a circuit with the IR associated heating element. One goal of the present invention is to reduce or eliminate the emission of electric fields into the sauna from such panels, in particular the IR heating element. Electric fields can be reduced or eliminated by a conductive shielding layer electrically coupled to earth ground and disposed between the source of the electric field and the area of desired field reduction.

Shielding of infrared panels is embodied herein in many forms. Some forms include the use of single- or double-layered conductive materials that can be used to overlay or cover the IR heating elements, the shielding is printed directly onto the panel or substrate so as to positioned atop the IR heating elements. The shielding may be connected to earth ground in order to prevent the buildup of electrical charge or the flow of induced electrical currents there through.

In an additional element, an IR heating panel for a sauna is provided. The panel comprises a thermally and electrically insulating substrate, a power buss, a plurality of IR heating elements electrically coupled to the power buss and supported by the substrate, a plurality of return elements each electrically coupled to the power buss and to a corresponding one of the IR heating elements, and a shielding layer substantially covering each of the IR heating elements and the power buss. The IR heating elements and return elements form a circuit with the power buss, wherein electrical power provided to the circuit causes at least the IR heating element to emit IR radiation. The shielding layer is arranged such that the IR heating elements and power buss are disposed between the shielding layer and the substrate. The shielding layer is electrically coupled to ground and configured to harness and shunt electric field charge emitted by the power buss or the IR heating elements. The return elements can be positioned underneath and aligned with the corresponding IR heating elements. The shielding layer is printed onto the substrate.

A method for producing an IR heating panel for a sauna is provided. The method comprises providing a thermally and electrically insulating substrate; coupling, to the substrate, a plurality of IR heating elements return elements associated with one IR heating element, and a power buss such that the at least one IR heating element, return element and power buss are supported by the substrate; electrically coupling the at least one IR heating element and return element to the power buss such that, as electrical power is applied to the power buss, an electrical current flows through the IR heating elements, causing it to emit IR radiation, and back through the return element; and applying, to the substrate, a shielding layer that is disposed between the substrate and the shielding layer and electrically coupled to ground, such that electric field charges emitted from the at least one IR heating element are harnessed and shunted by the shielding layer.

These and other aspects and features of the invention will be more fully understood and appreciated by reference to the appended drawings and the description of the preferred embodiments.

### BRIEF DESCRIPTION OF THE DRAWINGS

FIG. 1 is a cross-sectional view of a front side of an exemplary IR heating panel in accordance with certain embodiments of the invention;
FIG. 2 is an enlarged view of a portion of the cross-sectional view of FIG. 1;
FIG. 3 is an elevation view of an exemplary dual-layer EF shield with a portion of the shield pulled back for illustrative purposes which does not fall under the scope of the claims,
FIG. 4 is an elevation view of an exemplary single-layer EF shield which does not fall under the scope of the claims;
FIG. 5 is a cross-sectional view of the panel of FIG. 2, taken at line 5-5.

### DETAILED DESCRIPTION

The following detailed description is exemplary in nature and is not intended to limit the scope, applicability, or configuration of the invention in any way. Rather, the following description provides some practical illustrations for implementing exemplary embodiments of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives. Where applicable, like reference numbers will be used for like components, though like components need not be identical from embodiment to embodiment.

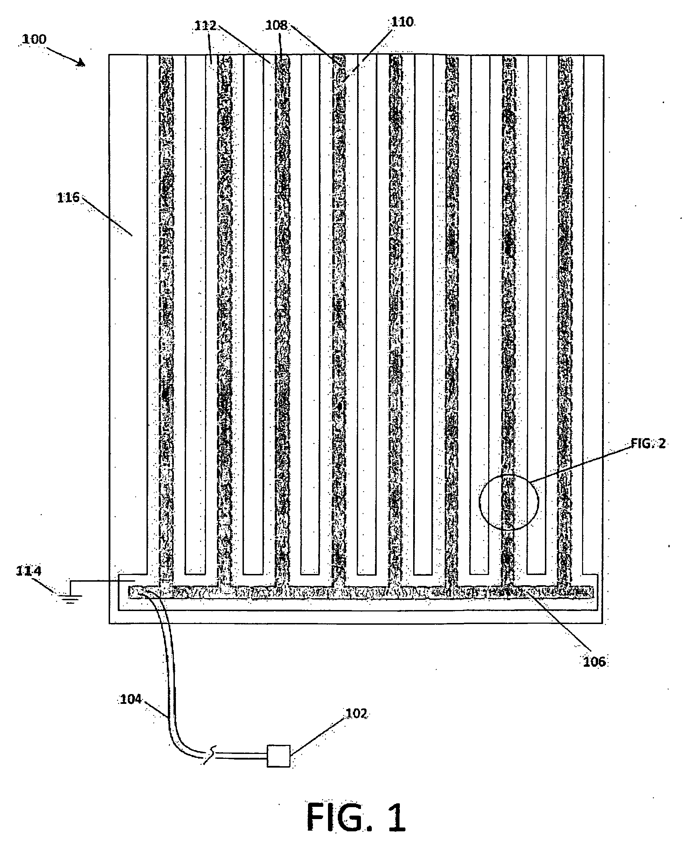

Saunas that employ electrically energized heaters generally utilize a series of individual infrared (IR) heating panels, designed to emit IR radiation into the sauna room. FIG. 1 shows a cross-sectional view of a front side of an exemplary IR heating panel 100 in accordance with certain embodiments of the invention. As shown, the panel 100 includes an insulating substrate 116. In certain embodiments, the substrate 116 can be formed of a non-flammable, electrically and thermally insulating material. One example of such material is FR-4 glass-reinforced epoxy, a material often used in printed circuit board (PCB) applications. Supported by the substrate 116 are a series of IR heating elements 108, configured to produce IR radiation when an electrical current is passed there through. In certain embodiments, the elements 108 may be encased within the substrate 116, as is the case exemplified in FIG. 1; however, the elements 108 can instead be laid atop the substrate 116. While a series of such elements 108 are shown, the invention should not be so limited. In certain embodiments, the IR heating elements 108 can take the form of carbon fiber circuit printings on the substrate 116, and in certain cases, can be semi-conductive; however, the invention should not be limited to such.

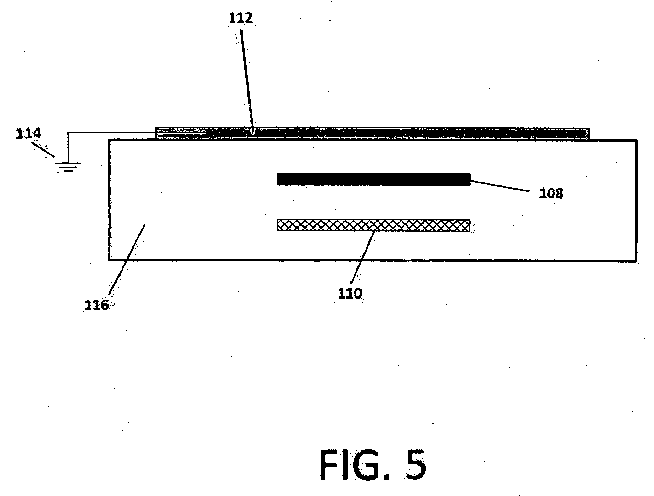

Each IR heating element 108 is connected to a power supply. In the embodiment shown in FIG. 1, each IR heating element 108 is electrically coupled to a power distribution buss 106. The buss 106, in turn, can be electrically coupled to an external power source 102 (e.g., such as a standard power outlet) via electrical power cord 104. Electrical return elements 110 associated with each IR heating element 108 can, in certain embodiments, be situated along the back side of the panel 100. This is the case exemplified in FIG. 1 wherein the return elements 110 are situated underneath the IR heating elements 108 (and thus hidden from view); however, the invention should not be limited to such arrangement. As is known, the return elements 110 (shown in FIG. 5) provide a current return path for the IR heating elements 108 back to the power buss 106. As such, a series circuit arrangement is provided involving the IR heating element 108, the return element 110, and the power buss 106.

In certain embodiments, the return elements 110 can be conductive, and in further embodiments, the IR heating elements 108 can be semi-conductive, thus providing higher electrical resistance than the return elements 110 so as to dissipate more electrical power. Alternatively, the return elements 110 may each further include an additional IR heating element, such that infrared radiation is emitted from multiple sides (e.g., front and back sides) of the panel 100, for example. In such embodiments, further shielding may additionally be utilized to more closely cover the return elements 110.

In certain embodiments, the return elements 110, are situated below yet also aligned with (e.g., running parallel to) corresponding of the IR heating elements 108, so that currents flowing through the two elements 108, 110 travel in opposite directions yet are in close proximity. Such a configuration allows the magnetic field generated from each return element 110 to generally oppose the magnetic field generated from each IR heating element 108, resulting in the fields generally negating each other. To allow for further magnetic field cancellation, the supply and return paths of the buss 106, as well as the conductors of the power cord 104 coupling the buss 106 to an external supply, may also be configured to be in close proximity to one another. In further embodiments, the cord 104 may comprise a twisted pair of conductors, reducing field emissions therefrom as current flows there through. To that end, it is to be appreciated that various configurations of the IR heating panel 100 allow for the reduction of emitted magnetic fields.

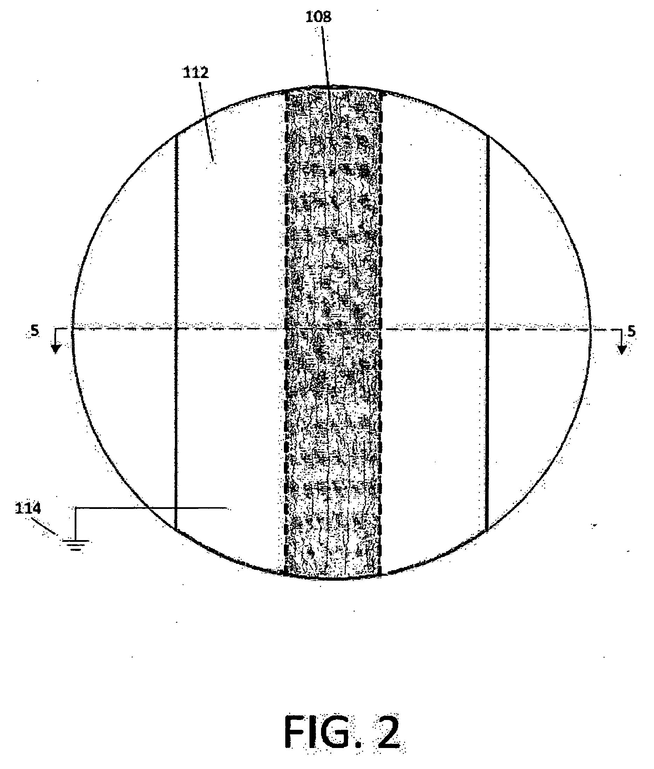

During operation, power supplied to the IR heating elements 108 corresponds to electric field (EF) generation. As exemplified in FIG. 1, electrically conducting shielding 112 is situated to overlay the IR heating elements 108 in an effort to harness the electric field. With continued reference to FIG. 1 (and FIGS. 2 and 5), in certain embodiments, the shielding 112 can be formed to cover the entire upper surface of the IR heating elements 108 (as well as that of the return elements 110), and is electrically coupled to earth ground 114 so as to conduct, or effectively shunt, any induced electric currents to ground. In certain embodiments, the shielding 112 can be formed of a metallic or otherwise conductive one or more layers such as a metallic print. The shielding 112 in use is intended to overlay the radiation emitters of the panel 100 to effectively form an EF shielding plane. Earth ground 114 is illustrated with an electrical symbol throughout the figures, but it should be appreciated that the physical electrical coupling to earth ground 114 can be provided in any suitable manner. As just one example, the shielding 112 may be electrically coupled to a conductor within power cord 104 that is coupled to earth ground (e.g., through an electrical socket).

FIG. 2 is an enlarged view of circled section of FIG. 1. In particular, FIG. 2 shows a portion of a single IR heating element 108 (overlaying the substrate 116), with shielding 112 completely overlaying the IR heating element 108 and being electrically coupled to earth ground 114. Thus, electric fields stemming outward toward the front of the panel 100 may be harnessed or captured by the shielding 112 and conducted to ground 114, minimizing a buildup of charge on the shielding 112. In certain embodiments, the shielding 112 may completely cover each IR heating element 108 in strips such as is shown in FIG. 1. Alternately, in certain embodiments, a single shielding 112 plane may be used to collectively cover each and every IR heating element 108, which does not fall under the scope of the claims.

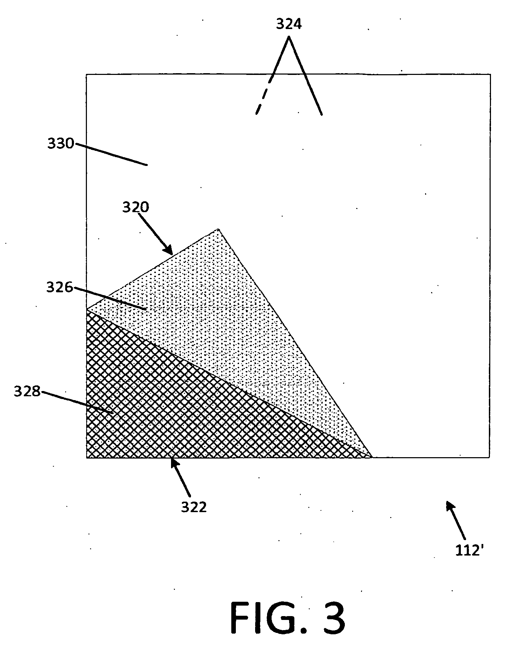

Various embodiments of shielding 112 can be implemented with an IR heating panel. FIG. 3 is a view of a dual-layer EF shield 112' which does not fall under the scope of the claims. As shown, the shield 112' includes a first layer 320 and a second layer 322, each of which is generally flat and includes black coloring on at least the outer surface 324. The surfaces 324 may be naturally black, or may be colored black using known methods and materials. With regard to the first layer 320, the inner surface comprises a black plain weave conductive fabric 326, shown by a crosshatched pattern in FIG. 3. In certain embodiments, the conductive fabric 326 is sized at least large enough to completely cover the upper surface of at least one of the IR heating elements 108 of the panel 100 which does not fall under the scope of the claims. In certain embodiments, a high-temperature adhesive (referenced as 328 and exemplarily shown on inner surface of the second layer 322) is applied between the first 320 and second 322 layers, and secures the two layers together in such a way so that the black surfaces 324 define opposing surfaces of the shield 112'. In certain embodiments, after the above assembly steps, the outer surfaces of the shield 112' can be coated with a flame retardant surface coating 330. The resulting shield 112' can in turn be configured as a multi-functional shield. In particular, the shield 112' can be configured to harness induced electrical charge from the IR (and return) elements via the conductive fabric 326, withstand high temperatures associated with the heating panel 100 via the high temperature adhesive 328 and the flame retardant coating 330, and effectively transmit IR energy coming from the panel via the black coating on each outer side.

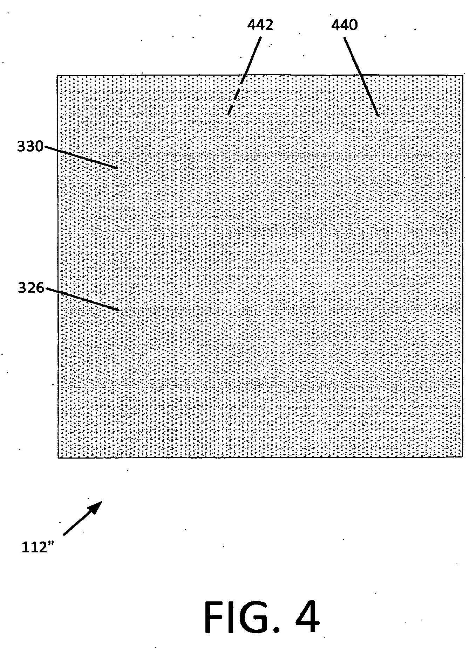

As an alternative to the dual-layer shield 112' of FIG. 3, FIG. 4 shows a single-layer EF shield 112" which does not fall under the scope of the claims. The single-layer shield 112" has similarities to the dual-layer EF shield 112' of FIG. 3. For example, the single-layer shield 112" includes a conductive weave fabric 326. The single layer shield additionally includes outer surfaces (front surface 440 and back surface 442) having black coloring or covering. Alternately, in certain embodiments, the conductive weave fabric 326 can itself be black. In certain embodiments, the fabric 326 can also be coated with a flame retardant surface coating 330. Thus, the resulting shield 112" can in turn be configured as a multi-functional shield. In particular, the shield 112" can be configured to harness induced electrical charge from the IR (and return) elements via the conductive fabric 326, withstand high temperatures associated with the heating panel 100 via the flame retardant coating 330, and effectively transmit IR energy coming from the panel via the black coating on each outer surface 440, 442.

The conductive shielding (or shield) 112 of FIG. 1 can be constructed in multiple ways. In certain embodiments, the shielding involves a weave configuration, such as the dual-layered or single-layered shields 112', 112" shown in FIGS. 3 and 4, respectively, which does not fall under the scope of the claims. Such weaves can be coupled atop of the panel or adhered thereto so as to be maintained in a position substantially overlaying the IR heating elements 108. In certain embodiments, the weaves are positioned to entirely overlay the IR heating elements 108 which does not fall under the scope of the claims. Alternatively, in certain embodiments, the conductive EF shield 112 may comprise a printed layer that is situated above the IR heating elements, as further described herein with regard to FIG. 5.

FIG. 5 is a cross-sectional view of the panel of FIG. 2, taken at line 5-5 and including a printed shielding layer. The panel 100 comprises an IR heating element 108, a return element 110 shown in a double crosshatched pattern, and a conductive shielding 112 coupled to earth ground 114, all layered within an insulating substrate 116. Exemplary materials can include carbon fiber for the IR heating element 108, copper for the return element 110, and carbon fiber for the printed shielding layer 112. As described above, the substrate 116 can be formed of an FR-4 material. In certain embodiments, the insulating substrate 116 can be patterned with particular traces of conducting elements to allow current conduction along certain paths, similar to known PCB manufacturing methods. Thus, in such an embodiment, differing layers of substrate 116 can be formed, with intervening steps taking place in forming layers involving the return element 110, the IR heating element 108, and the conductive shielding 112. While not shown in FIG. 5, in cases in which the conductive shielding 112 is a printed layer, then a final substrate 116 layer is formed to overlay the shielding 112. Incorporating such known methods of PCB manufacturing in the design process of the IR heating panel enables possible lower cost and increased efficiency of production.

Continuing with FIG. 5 (and with reference to FIG. 1), during operation of the panel 100, power is provided to the distribution buss 106, so as to energize the IR heating elements 108. In a return path to the power source 102 (via the buss 106), oppositely-directed current flows back through the return element 110. The electrical energy supplied to the IR heating elements 108 results in emission of IR radiation. However, the current flowing through the elements 108 also results in the elements 108 in EF generation. In the embodiment of FIG. 5, conductive shielding 112 (e.g., printed shielding layer) is provided above the IR heating element 108 to prevent such electric fields from being emitted from the panel 100. The shielding 112 is electrically coupled to earth ground to conduct, and effectively shunt, any induced charge from the electric field. In the embodiment shown in FIG. 5, the IR heating element 108, shielding 112, and return element 110 are electrically isolated from one another by layers of the substrate material 116, such as FR-4. While the illustrated embodiment of FIG. 5 shows the shielding 112 to extend a certain width beyond the edges of the IR heating element 108, alternative embodiments which do not fall under the scope of the claims may comprise the shielding 112 being entirely continuous across every IR heating element 108 of the panel 100.

In certain embodiments, the shielding 112, 112', 112" can be used to cover the buss 106 in addition to the IR heating and return elements 108, 110. Referring back to FIG. 1, the shielding 112 is shown as covering each IR heating element 108 and the buss 106. In some embodiments, small gaps in the shielding 112 (between the IR heating elements 108, as shown) may be necessary to allow for electrical connection between various components.

It should be understood that the foregoing is a description of preferred embodiments of the invention, and various changes and alterations can be made without departing from the scope of the claims.

## Claims

1. An infrared (IR) heating panel (100) for a sauna, comprising:
a thermally and electrically insulating substrate (116);
a power buss (106);
a plurality of IR heating elements (108) electrically coupled to the power buss and supported by and spaced across the substrate, each IR heating element configured to emit IR radiation when an electrical current is passed there through;
a plurality of return elements (110), each of the return elements being associated with one of the IR heating elements and electrically coupled to the power buss and the associated IR heating element; and
a shielding layer (112), the shielding layer arranged such that the IR heating elements are disposed between the shielding layer and the substrate, the shielding layer electrically can be coupled to ground (114) and configured to harness and shunt electrical field charge emitted by the IR heating elements, **characterized in that** the shielding layer comprises a printed layer covering the IR heating elements in strips such that the shielding layer has small gaps between the IR heating elements.

2. The IR heating panel of claim 1, wherein the at least one IR heating element has a higher electrical resistance than the at least one return element.

3. The IR heating panel according to any of the preceding claims, further comprising a further shielding layer positioned between the return elements and the substrate so as to further harness and shunt electrical field charge emitted by the IR heating elements.

4. The IR heating panel according to any of the preceding claims, wherein the IR heating elements and/or shielding layer comprises a carbon material.

5. The IR heating panel according to any of the preceding claims, wherein the shielding layer comprises the same material as the IR heating elements.

6. A method for producing an infrared (IR) heating panel (100) for a sauna, the method comprising:
providing a thermally and electrically insulating substrate (116);
coupling, to the substrate, a plurality of IR heating elements (108), a plurality of return elements (110), each return element associated with one of the IR heating elements, and a power buss (106) such that the IR heating elements, return elements and power buss are supported by the substrate and the IR heating elements are spaced across the substrate;
electrically coupling each IR heating element and associated return element to the power buss such that, as electrical power is applied to the power buss, an electrical current flows through the each IR heating element, causing it to emit IR radiation, and back through the associated return element; and
applying, to the substrate, a shielding layer (112) comprising a printed layer covering the IR heating elements in strips such that the shielding layer has small gaps between the IR heating elements, the shielding layer arranged such that the IR heating elements are disposed between the shielding layer and the substrate, the shielding layer electrically coupled to ground (114) and configured to harness and shunt electrical field charge emitted by the IR heating elements, wherein the step of applying the shielding layer comprises printing the shielding layer.

7. The method of claim 6, wherein electrically coupling the at least one IR heating element and return element to a power buss creates a series electrical circuit comprising the three.

## Patentansprüche

1. Infrarot-Heizungspaneel (IR-Heizungspaneel) (100) für eine Sauna, das Folgendes umfasst:
ein thermisch und elektrisch isolierendes Substrat (116);
einen Leistungsbus (106);
mehrere IR-Heizelemente (108), die mit dem Leistungsbus elektrisch gekoppelt sind und durch das Substrat getragen werden und über dieses hinweg in Abständen angeordnet sind, wobei jedes IR-Heizelement dazu ausgelegt ist, IR-Strahlung emittieren, wenn ein elektrischer Strom durch es geleitet wird;
mehrere Rückführungselemente (110), wobei jedes der Rückführungselemente einem der IR-Heizelemente zugeordnet ist und mit dem Leistungsbus und dem zugeordneten IR-Heizelement elektrisch gekoppelt ist; und
eine Abschirmungsschicht (112), wobei die Abschirmungsschicht derart angeordnet ist, dass die IR-Heizelemente zwischen der Abschirmungsschicht und dem Substrat angeordnet sind, wobei die Abschirmungsschicht elektrisch mit Masse (114) gekoppelt ist und dazu ausgelegt ist, eine elektrische Feldladung, die durch die IR-Heizelemente emittiert wird, einzudämmen und abzuleiten, **dadurch gekennzeichnet, dass** die Abschirmungsschicht eine gedruckte Schicht umfasst, die die IR-Heizelemente in Streifen derart abdeckt, dass die Abschirmungsschicht kleine Lücken zwischen den IR-Heizelementen aufweist.

2. IR-Heizungspaneel nach Anspruch 1, wobei das mindestens eine IR-Heizelement einen höheren elektrischen Widerstand als das mindestens eine Rückführungselement aufweist.

3. IR-Heizungspaneel nach einem der vorhergehenden Ansprüche, das ferner eine weitere Abschirmungsschicht umfasst, die zwischen den Rückführungselementen und dem Substrat angeordnet ist, um die elektrische Feldladung, die durch die IR-Heizelemente emittiert wird, weiter einzudämmen und abzuleiten.

4. IR-Heizungspaneel nach einem der vorangehenden Ansprüche, wobei die IR-Heizelemente und/oder die Abschirmungsschicht ein Kohlenstoffmaterial umfasst.

5. IR-Heizungspaneel nach einem der vorhergehenden Ansprüche, wobei die Abschirmungsschicht das gleiche Material wie die IR-Heizelemente enthält.

6. Verfahren zum Herstellen eines Infrarot-Heizungspaneels (IR-Heizungspaneels) (100) für eine Sauna, wobei das Verfahren Folgendes umfasst:
Bereitstellen eines thermisch und elektrisch isolierenden Substrats (116);
Koppeln mehrerer IR-Heizelemente (108), mehrerer Rückführungselemente (110), wobei jedes Rückführungselement einem der IR-Heizelemente zugeordnet ist, und eines Leistungsbusses (106) mit dem Substrat, so dass die IR-Heizelemente, die Rückführungselemente und der Leistungsbus durch das Substrat getragen werden und die IR-Heizelemente über das Substrat hinweg in Abständen angeordnet sind;
elektrisches Koppeln jedes IR-Heizelements und des zugehörigen Rückführungselements mit dem Leistungsbus, so dass dann, wenn elektrische Leistung an den Leistungsbus angelegt wird, ein elektrischer Strom durch das jeweilige IR-Heizelement fließt, was bewirkt, dass es IR-Strahlung emittiert, und zurück durch das zugehörige Rückführungselement fließt; und
Aufbringen einer Abschirmungsschicht (112) auf das Substrat, die eine gedruckte Schicht umfasst, die die IR-Heizelemente in Streifen abdeckt, so dass die Abschirmungsschicht kleine Lücken zwischen den IR-Heizelementen aufweist, wobei die Abschirmungsschicht so angeordnet ist, dass die IR-Heizelemente zwischen der Abschirmungsschicht und dem Substrat angeordnet sind, wobei die Abschirmungsschicht elektrisch mit Masse (114) gekoppelt ist und dazu ausgelegt ist, eine elektrische Feldladung, die durch die IR-Heizelemente emittiert wird, einzudämmen und abzuleiten, wobei der Schritt des Aufbringens der Abschirmungsschicht ein Drucken der Abschirmungsschicht umfasst.

7. Verfahren nach Anspruch 6, wobei das elektrische Koppeln des mindestens einen IR-Heizelements und des Rückführungselements mit einem Leistungsbus eine elektrische Reihenschaltung schafft, die die drei umfasst.

## Revendications

1. Panneau de chauffage infrarouge (IR) (100) pour un sauna, comprenant :
un substrat thermiquement et électriquement isolant (116) ;
une barre d'alimentation (106) ;
une pluralité d'éléments chauffants IR (108) électriquement couplés à la barre d'alimentation et supportés par et espacés le long du substrat, chaque élément chauffant IR étant configuré pour émettre un rayonnement IR quand on fait circuler un courant électrique à travers celui-ci ;
une pluralité d'éléments de retour (110), chacun des éléments de retour étant associé à un des éléments chauffants IR et électriquement couplé à la barre d'alimentation et à l'élément chauffant IR associé ; et
une couche de blindage (112), la couche de blindage étant agencée de telle sorte que les éléments chauffants IR sont disposés entre la couche de blindage et le substrat, la couche de blindage pouvant électriquement être couplée à une terre (114) et configurée pour maîtriser et détourner la charge du champ électrique émis par les éléments chauffants IR, **caractérisé en ce que** la couche de blindage comprend une couche imprimée recouvrant les éléments chauffants IR par bandes de telle sorte que la couche de blindage comporte de petits interstices entre les éléments chauffants IR.

2. Panneau de chauffage IR de la revendication 1, dans lequel l'au moins un élément chauffant IR a une résistance électrique supérieure à celle de l'au moins un élément de retour.

3. Panneau de chauffage IR selon l'une quelconque des revendications précédentes, comprenant en outre une autre couche de blindage positionnée entre les éléments de retour et le substrat de manière à maîtriser et détourner encore plus la charge du champ électrique émis par les éléments chauffants IR.

4. Panneau de chauffage IR selon l'une quelconque des revendications précédentes, dans lequel les éléments chauffants IR et/ou la couche de blindage comprennent un matériau carboné.

5. Panneau de chauffage IR selon l'une quelconque des revendications précédentes, dans lequel la couche de blindage comprend le même matériau que les éléments chauffants IR.

6. Procédé de production d'un panneau de chauffage infrarouge (IR) (100) pour un sauna, le procédé comprenant :
l'obtention d'un substrat thermiquement et électriquement isolant (116) ;
le couplage, au substrat, d'une pluralité d'éléments chauffants IR (108), d'une pluralité d'éléments de retour (110), chaque élément de retour étant associé à un des éléments chauffants IR, et d'une barre d'alimentation (106) de telle sorte que les éléments chauffants IR, les éléments de retour et la barre d'alimentation soient supportés par le substrat et les éléments chauffants IR soient espacés le long du substrat ;
le couplage électrique de chaque élément chauffant IR et de l'élément de retour associé à la barre d'alimentation de telle sorte que, lorsque de l'énergie électrique est appliquée à la barre d'alimentation, un courant électrique circule à travers chaque élément chauffant IR, le faisant émettre un rayonnement IR, et revienne par l'élément de retour associé ; et
l'application, au substrat, d'une couche de blindage (112) comprenant une couche imprimée recouvrant les éléments chauffants IR par bandes de telle sorte que la couche de blindage comporte de petits interstices entre les éléments chauffants IR, la couche de blindage étant agencée de telle sorte que les éléments chauffants IR sont disposés entre la couche de blindage et le substrat, la couche de blindage étant électriquement couplée à une terre (114) et configurée pour maîtriser et détourner la charge du champ électrique émis par les éléments chauffants IR, l'étape d'application de la couche de blindage comprenant l'impression de la couche de blindage.

7. Procédé de la revendication 6, dans lequel le couplage électrique de l'au moins un élément chauffant IR et l'élément de retour à une barre d'alimentation crée un circuit électrique en série comprenant les trois.
